## Europäisches Patentamt

## European Patent Office

## Office européen des brevets

(11) Numéro de publication: **0 071 556**
**B1**

(12) # FASCICULE DE BREVET EUROPEEN

(45) Date de publication du fascicule du brevet:
06.11.85

(51) Int. Cl.⁴: **F 16 D 1/08**

(21) Numéro de dépôt: 82440024.6

(22) Date de dépôt: 27.07.82

(54) **Dispositif de blocage et/ou de serrage d'attaches modulaires de têtes et de barres d'alésage, de mandrins à pompe, de pinces longues, ou d'autres pièces mécaniques.**

(30) Priorité: 27.07.81 FR 8114805

(43) Date de publication de la demande:
09.02.83 Bulletin 83/6

(45) Mention de la délivrance du brevet:
06.11.85 Bulletin 85/45

(84) Etats contractants désignés:
AT BE CH DE GB IT LI LU NL SE

(56) Documents cités:
DE - C - 911 197
DE - U - 6 900 001
GB - A - 1 423 867
US - A - 2 460 091
US - A - 2 467 819
US - A - 2 503 860
US - A - 2 505 215

(73) Titulaire: **EMILE PFALZGRAF "EPB", S.A., 7, rue de Neuwiller, F-67330 Bouxwiller (FR)**

(72) Inventeur: **Pfalzgraf, Emile, 7, rue de Neuwiller, F-67330 Bouxwiller (FR)**

(74) Mandataire: **Nuss, Pierre, 10, rue Jacques Kablé, F-67000 Strasbourg (FR)**

## Description

La présente invention concerne le domaine du blocage et/ou du serrage d'attachements modulaires de têtes et de barres d'alésage, de mandrins à pompe, de pinces longues, ou d'autres pièces mécaniques, et a pour objet un dispositif destiné à cet effet.

Il existe actuellement divers dispositifs de fixation par vis du type à pointeau permettant d'effectuer un tel blocage ou serrage, ces vis présentant des angles en bout variant de 30° à 90° et étant bloquées dans un trou situé dans l'axe de la vis ou déporté par rapport à cet axe (DE-U- 6900001, GB-A-1423867). En outre, il existe également des dispositifs de fixation sur plat par vis inclinée, par goupille, ou par clavetage.

Cependant, ces dispositifs de blocage et/ou de serrage connus ne permettent généralement que la fixation d'un type d'attachement bien précis, un attachement différent nécessitant obligatoirement un dispositif différent. De ce fait, la réalisation d'une liaison entre un arbre entraîneur et un élément entraîné nécessite un grand nombre de pièces intermédiaires augmentant de manière considérable les coûts de production, et limitant les possibilités des machines.

La présente invention a pour but de pallier ces inconvénients.

Elle a, en effet, pour objet un dispositif de blocage et/ou de serrage d'attachements modulaires de têtes et de barres d'alésage, de mandrins à pompe, de pinces longues, ou d'autres pièces mécaniques, selon la revendication 1.

L'invention sera mieux comprise grâce à la description ci-après, qui se rapporte à des modes de réalisation préférés, donnés à titre d'exemples non limitatifs, et expliqués avec référence au dessin schématique annexé, dans lequel:

la figure 1 est une vue partielle en élévation latérale, partiellement en coupe, d'un bout d'arbre et d'un élément à entraîner munis du dispositif conforme à l'invention, et

la figure 2 est une vue analogue à celle de la figure 1, d'une variante de réalisation de l'invention.

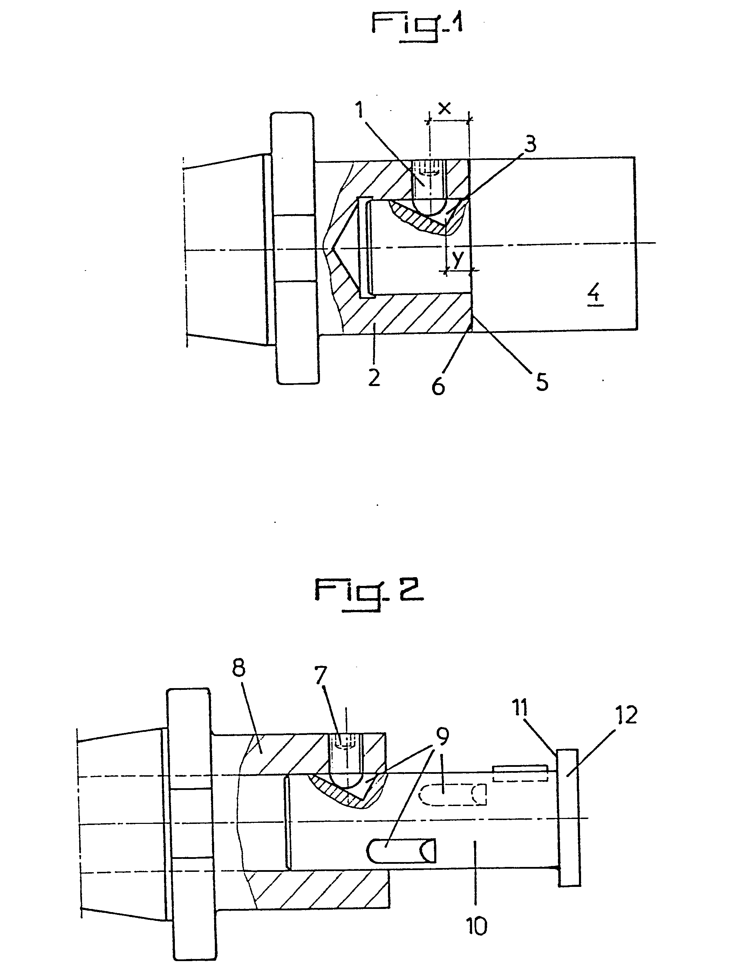

Conformément à l'invention, et comme le montre plus particulièrement, à titre d'exemple, la figure 1 du dessin annexé, le dispositif de blocage et/ou de serrage d'attachement modulaires de têtes et de barres d'alésage, de mandrins à pompe, de pinces longues, ou d'autres pièces mécaniques, est caractérisé en ce qu'il est constitué par une vis à bout sphérique 1 fixée dans un perçage taraudé de l'arbre entraîneur 2, et par une gorge longitudinale 3 de section semi-cylindrique prévue sur la pièce à entraîner 4, et s'étendant avec une inclinaison par rapport à la génératrice de ladite pièce à entraîner 4.

La vis 1 est avantageusement fixée sur l'arbre entraîneur 2 à une distance x de la face d'application 5 de la pièce à entraîner 4 qui est supérieure à la distance y du fond 6 de la gorge 3 à la face 5 de la pièce 4, de sorte que, par action du bout sphérique de la vis 1 sur la gorge inclinée 3, la face 5 de la pièce 4 s'applique contre la face 6 de l'arbre entraîneur 2.

La gorge 3 est inclinée par rapport à la génératrice de la pièce 4 d'un angle compris entre 15° et 75°, de préférence d'un angle de 30°.

Grâce au dispositif conforme à l'invention, il est possible de fixer divers types d'outillages de fabrications diverses par simple remplacement de la vis pointeau d'origine par une vis à bout sphérique, de sorte que lesdits outillages sont facilement interchangeables et que l'utilisateur dispose d'une plus grande souplesse d'utilisation.

En outre, du fait que la gorge 3 présente une section semi-cylindrique, la pièce 4 est immobilisée en rotation et est maintenue angulairement de manière très précise, le bout sphérique de la vis 1 étant en contact avec les parois de la gorge 3. Grâce à cette constitution, il se produit un léger blocage par déplacement relatif augmentant le serrage lors d'un effort de coupe.

La figure 2 représente une variante de réalisation de l'invention permettant de maintenir et de serrer un outillage entrant dans un logement et étant bloqué contre une face ou un cône, tel qu'un mandrin à pompe, un mandrin à pinces, ou analogue.

A cet effet, le dispositif est constitué par une vis à bout sphérique 7 fixée dans un perçage taraudé de l'arbre entraîneur 8, et par plusieurs gorges inclinées 9 à section semi-cylindrique disposées sur la circonférence de la pièce entraînée 10 à des distances différentes de la face 11 de la collerette 12 de ladite pièce 10.

Grâce à ce mode de réalisation, il est possible de régler une course de serrage plus ou moins longue, suivant l'épaisseur de l'outil coupant à serrer, par utilisation de la gorge 9 correspondante.

Grâce à l'invention, il est possible d'effectuer toujours le serrage d'un élément sans démontage d'un autre, la vis étant toujours accessible.

## Revendications

1. Dispositif de blocage et/ou de serrage d'attachements modulaires de têtes et de barres d'alésage, de mandrins à pompe, de pinces longues, ou d'autres pièces mécaniques, constitué par une vis (1) fixée dans un perçage taraudé de l'arbre entraîneur (2) à une certaine distance d'une face d'application (5) de la pièce à entraîner (4), et par une gorge (3) prévue sur la pièce à entraîner (4), et dont la distance (y) du fond à la face d'application (5) de la pièce à entraîner (4) est inférieure à celle (x) de la vis (1) à ladite face (5), dispositif caractérisé en ce que la vis (1) présente un bout sphérique et en ce que la gorge (3) est longitudinale, demi-cylindrique et s'étant avec une inclinaison par rapport à la génératrice de la pièce à entraîner (4).

2. Dispositif, suivant la revendication 1, caractérisé en ce que la gorge (3) est inclinée par rapport à la génératrice de la pièce (4) d'un angle compris entre 15° et 75°, de préférence d'un angle de 30°.

3. Dispositif, suivant l'une quelconque des revendications 1 et 2, caractérisé en ce qu'il est constitué par une vis à bout sphérique (7) fixée dans un perçage taraudé de l'arbre entraîneur (8), et par plusieurs gorges inclinées (9) à section semi-cylindrique disposées sur la circonférence de la pièce entraînée (10) à des distances différentes de la face (11) de la collerette (12) de ladite pièce (10).

**Patentansprüche**

1. Befestigung und/oder Klemmvorrichtung für modulare Anschlusschäfte von Ausdrehköpfen und Bohrstangen, Fräserdornen mit Einsätzen, langen Spannzangen oder anderen mechanischen Teilen, bestehend aus einer Schraube (1), die in einer gewindeten Bohrung des Anschlusselementes (2) in einer gewissen Entfernung von einer Ansatzfläche (5) des mitzunehmenden Werkstücks (4) befestigt ist, und aus einer auf dem mitzunehmenden Werkstück (4) vorgesehenen Auskehlung (3), deren Entfernung (y) von der tiefsten Stelle zur Ansatzfläche (5) des mitzunehmenden Werkstücks (4) geringer ist als die Entfernung (x) der Schraube (1) zu besagter Fläche (5), dadurch gekennzeichnet, dass die Schraube (1) eine Rundkuppe aufweist und dass die Auskehlung (3) longitudinal halbzylindrisch ist und sich, bezogen auf die Mantellinie des mitzunehmenden Werkstücks (4), mit einer Neigung erstreckt.

2. Vorrichtung nach Anspruch 1, dadurch gekennzeichnet, dass die Auskehlung (3), bezogen auf die Mantellinie des Werkstücks (4), in einem Winkel zwischen 15° und 75°, vorzugsweise in einem Winkel von 30° geneigt ist.

3. Vorrichtung nach einem der Ansprüche 1 und 2, dadurch gekennzeichnet, dass sie aus einer Kugeldruckanzugschraube (7) besteht, die in einer gewindeten Bohrung des Anschlusselementes (8) befestigt ist, und aus mehreren schräggestellten Auskehlungen (9) mit halbzylindrischem Querschnitt, die auf dem Umfang des mitzunehmenden Werkstücks (10) in verschiedenen Abständen von der Fläche (11) des Telleransatzes (12) des besagten Werkstücks (10) angeordnet sind.

**Claims**

1. Locking and/or securing device for modular attachments of boring heads and bars, pump chucks, long grippers, or other mechanical parts constituted by a screw (1), fixed in a capped bore of the drive shaft (2) at a certain distance from an application face (5) of the part to be driven (4), and by a groove (3) provided on the part to be driven (4) and in which the distance (y) from the bottom to the application face (5) of the part do be driven (4) is less than that (x) of the screw (1) from said face (5), characterized in that the screw (1) has a spherical end and in that the groove (3) is longitudinal and semi-cylindrical and is inclined with respect to the generatrix of the part to be driven (4).

2. Device, according to claim 1, characterized in that the groove (3) is inclined with respect to the generatrix of the part (4) by an angle between 15° and 75°, preferably by an angle of 30°

3. Device, according to either of the claims 1 and 2, characterized in that it is constituted by a spherical-ended screw (7), fixed in a capped bore of the drive shaft (8), and by several inclined grooves (9) having a semi-cylindrical section disposed on the circumference of the driven part (10) at different distances from the face (11) of the flange (12) of said part (10).

Fig.1

Fig.2